(19) Europäisches Patentamt
European Patent Office
Office européen des brevets

(11) **EP 2 852 163 A1**

(12) **EUROPEAN PATENT APPLICATION**
published in accordance with Art. 153(4) EPC

(43) Date of publication:
**25.03.2015 Bulletin 2015/13**

(51) Int Cl.:
***H04N 13/04*** (2006.01)

(21) Application number: **13790657.4**

(22) Date of filing: **27.03.2013**

(86) International application number:
**PCT/JP2013/058974**

(87) International publication number:
**WO 2013/172097 (21.11.2013 Gazette 2013/47)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **14.05.2012 JP 2012110717**

(71) Applicant: **Sony Corporation Tokyo 108-0075 (JP)**

(72) Inventors:
• **SHIMIZU, Akira**
**Tokyo 108-0075 (JP)**
• **WATANABE, Keisuke**
**Tokyo 108-0075 (JP)**

(74) Representative: **MFG Patentanwälte Meyer-Wildhagen Meggle-Freund Gerhard PartG mbB Amalienstraße 62 80799 München (DE)**

(54) **IMAGE PROCESSING DEVICE, IMAGE PROCESSING METHOD AND PROGRAM**

(57)    Provided is an image processing apparatus including a subtitle information acquiring unit configured to acquire subtitle information to be combined with a main stereoscopic picture, a parallax acquiring unit configured to acquire a parallax causing the subtitle information to be stereoscopically displayed, a stereoscopic subtitle picture generating unit configured to generate a stereoscopic subtitle picture to be stereoscopically displayed at a display position according to the parallax from the subtitle information, and an enlarging/reducing unit configured to enlarge or reduce the stereoscopic subtitle picture in a manner that a size of the stereoscopic subtitle picture increases as the display position approaches a front side.

FIG. 2

## Description

Technical Field

The present technology relates to an image processing apparatus, an image processing method, and a program causing a computer to execute the same method. Particularly, the present technology relates to an image processing apparatus and an image processing method that combine subtitles with a moving picture, and a program causing a computer to execute the same method.

Background Art

In the past, display devices that display a moving picture such that the moving picture can be stereoscopically viewed (that is, perform stereoscopic display) have been used. For example, a display device can cause a moving picture to be stereoscopically presented by imaging a left picture and a right picture having a parallax therebetween as pictures configuring the moving picture and displaying the left picture and the right picture such that the left picture is viewed by the left eye, and the right picture is viewed by the right eye. At the time of display, the display device alternately displays the left and right pictures in a time division manner, and an active shutter glasses scheme in which left and right shutters are operated by dedicated glasses in synchronization with a switching timing thereof is used.

In such display devices, a technique of combining closed captions with a moving picture has been proposed (for example, see Patent Literature 1). Closed captions are subtitles generated independently of a moving picture so that a display device can perform control, for example, such that subtitles are displayed or not displayed. On the other hand, subtitles that are supplied in a form combined with a moving picture and hardly controlled to be displayed or not displayed by a display device are referred to as open captions.

When a display device adds closed captions, the closed captions are considered to be stereoscopically displayed as well. Commonly, when subtitles are stereoscopically displayed, a planar subtitle picture indicating subtitles is generated and the subtitle picture is converted into a picture to be stereoscopically displayed using a 2D-to-3D conversion technique. The 2D-to-3D conversion refers to a technique of converting a picture that is not stereoscopically displayed into a picture to be stereoscopically displayed. Specifically, a technique of generating two pictures by causing a normal planar picture to deviate rightward and leftward in a horizontal direction and using one of the two pictures as a left picture to be viewed by the left eye and the other as a right picture to be viewed by the right eye is used (for example, see Patent Literature 2).

Citation List

Patent Literature

Patent Literature 1: JP 2012-4654A
Patent Literature 2: JP 3086577B

Summary of Invention

Technical Problem

However, in the related art, when a subtitle picture is stereoscopically displayed, it is hard to emphasize a sense of perspective. In the 2D-to-3D conversion disclosed in Patent Literature 2, a planar picture is simply shifted, and even when a planar subtitle picture is stereoscopically displayed using this technique, compared to when a moving picture including a stereoscopic object is stereoscopically displayed, a sense of perspective of a subtitle picture is insufficient. Thus, when a subtitle picture is stereoscopically displayed, it is desirable to emphasize a sense of perspective of the subtitle picture. Meanwhile, in the related art, since a process of changing a sense of perspective of a picture is not performed, when this technique is applied to a case of stereoscopically displaying a subtitle picture, there is a problem in that a sense of perspective is insufficient.

The present technology was made in light of the foregoing, and it is an object of the present technology to emphasize a sense of perspective of a subtitle picture.

Solution to Problem

The present technology has been made to solve the above problems, and according to a first aspect thereof, there is provided an image processing apparatus including a subtitle information acquiring unit configured to acquire subtitle information to be combined with a main stereoscopic picture, a parallax acquiring unit configured to acquire a parallax causing the subtitle information to be stereoscopically displayed, a stereoscopic subtitle picture generating unit configured to generate a stereoscopic subtitle picture to be stereoscopically displayed at a display position according to the parallax from the subtitle information, and an enlarging/reducing unit configured to enlarge or reduce the stereoscopic subtitle picture in a manner that a size of the stereoscopic subtitle picture increases as the display position approaches a front side; an image processing method; and a program for causing a computer to execute the method. Thus, an effect of enlarging or reducing a stereoscopic subtitle picture such that the size of the stereoscopic subtitle picture increases as a display position approaches a front side is obtained.

According to the first aspect, the enlarging/reducing unit may enlarge the stereoscopic subtitle picture according to the parallax when the display position is in front of a certain reference position, and reduces the stereoscopic subtitle picture according to the parallax when the display position is behind the certain reference position. Thus, an effect of enlarging a stereoscopic subtitle picture according to a parallax when a display position is in front of a reference position and reducing a stereoscopic subtitle picture according to a parallax when a display position is behind the reference position is obtained.

According to the first aspect, a subtitle combining unit configured to combine the enlarged or reduced stereoscopic subtitle picture with the main stereoscopic picture may be further included. Thus, an effect of combining an enlarged or reduced stereoscopic subtitle picture with a main stereoscopic picture is obtained.

According to the first aspect, a buffer configured to hold the subtitle picture, a parallax of the subtitle information, and a display timing in association with one another, and a control unit configured to read the subtitle information and the parallax corresponding to the display timing from the buffer at the display timing and supply the subtitle information and the parallax to the picture generating unit may be further included, and the subtitle information acquiring unit may further acquire the display timing and causes the display timing to be held in the buffer in association with the subtitle information, and the parallax acquiring unit may further acquire the display timing and causes the parallax to be held in the buffer in association with the display timing. Thus, an effect of supplying subtitle information and a parallax corresponding to a display timing to a picture generating unit at the display timing is obtained.

According to the first aspect, the enlarging/reducing unit may enlarge or reduce the stereoscopic subtitle picture according to an enlargement ratio or a reduction ratio corrected based on a certain correction coefficient. Thus, an effect of enlarging or reducing a stereoscopic subtitle picture according to an enlargement ratio or a reduction ratio corrected based on a certain correction coefficient is obtained.

According to the first aspect, the subtitle information may include a picture indicating subtitles or a character string indicating the subtitles. Thus, an effect of including a picture or a character string in a subtitle picture is obtained.

Advantageous Effects of Invention

According to the present technology, an excellent effect of emphasizing a sense of perspective of a subtitle picture is obtained.

Brief Description of Drawings

[FIG. 1] FIG. 1 is an overall diagram illustrating an exemplary information processing system according to an embodiment.
[FIG. 2] FIG. 2 is a block diagram illustrating an exemplary configuration of an image processing apparatus according to the embodiment.
[FIG. 3] FIG. 3 is a diagram for describing an exemplary configuration of a moving picture stream according to the embodiment.
[FIG. 4] FIG. 4 is a diagram illustrating an exemplary configuration of a subtitle stream according to the embodiment.
[FIG. 5] FIG. 5 is a diagram illustrating an exemplary data structure of a PES packet of a subtitle stream according to the embodiment.
[FIG. 6] FIG. 6 is a diagram illustrating exemplary data stored in a PES packet of a subtitle stream according to the first embodiment.
[FIG. 7] FIG. 7 is a diagram illustrating an exemplary configuration of a subtitle data buffer according to an embodiment.
[FIG. 8] FIG. 8 is a diagram illustrating an exemplary operation of an image processing apparatus according to an embodiment.
[FIG. 9] FIG. 9 is a diagram for describing a parallax according to an embodiment.
[FIG. 10] FIG. 10 is a diagram illustrating an exemplary stereoscopic display method according to an embodiment.
[FIG. 11] FIG. 11 is a diagram illustrating an exemplary stereoscopic subtitle picture in which a sense of perspective is emphasized according to an embodiment.

Description of Embodiments

Hereinafter, modes (hereinafter referred to as "embodiments") for carrying out the present technology will be described. The description will proceed in the following order.

1. First embodiment (example of enlarging or reducing stereoscopic subtitle picture according to parallax)
2. Modified example (example of enlarging or reducing stereoscopic subtitle picture according to parallax based on left subtitle picture)

<1. First embodiment>

[Exemplary configuration of information processing system]

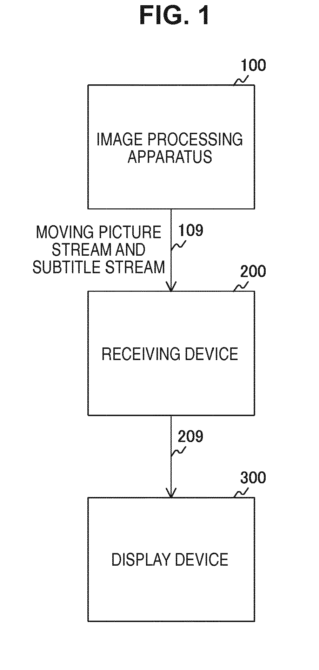

FIG. 1 is an overall diagram illustrating an example of an information processing system according to an embodiment. The information processing system includes a receiving device 100, an image processing apparatus 200, and a display device 300.
The receiving device 100 receives a moving picture stream and a subtitle stream. The moving picture stream is data of a moving picture delivered from a broadcasting station or the like in conformity with a certain broadcasting standard. As a broadcasting standard, for example, a digital video broadcast (DVB) is used. The moving picture includes a plurality of pictures that are chronologically displayed. Further, the moving picture is a moving picture created to be stereoscopically displayed, and each of the pictures in the moving picture is referred to as a "main stereoscopic picture." Each of the main stereoscopic pictures includes a left main picture viewed by the viewer's left eye and a right main picture viewed by the right eye.

The moving picture is coded according to a certain coding scheme as necessary. As a coding scheme, for example, a Moving Picture Experts Group (MPEG) 2-transport stream (TS) standard is used. In the MPEG2-TS, a coded picture is stored in a packetized elementary stream (PES) packet, and each picture is associated with a presentation time stamp (PTS). The PTS is reproduction output time management information, and indicates when a picture given a time stamp is reproduced and output.

Further, the receiving device 100 may receive analog broadcasting and perform analog to digital (A/D) conversion on a broadcast wave to generate a moving picture stream.

The subtitle stream received by the receiving device 100 is data related to subtitles delivered from a broadcasting station or the like. Specifically, the subtitle stream includes subtitle data and a parallax. The subtitle data includes, for example, a picture (hereinafter referred to as a "subtitle picture") indicating subtitles and a character string indicating subtitles. The parallax functions to cause subtitles to be stereoscopically displayed. Specifically, when a left subtitle picture and a right subtitle picture are generated from subtitle data, deviation between pictures in the horizontal direction corresponds to a parallax. A picture including a left subtitle picture and a right subtitle picture is hereinafter referred to as a "stereoscopic subtitle picture." The subtitle data and the parallax are coded and stored in a PES packet as necessary, and each of the subtitle data the parallax is provided with the PTS. The PTS is time management information indicating when the subtitles are reproduced and output, and is used to reproduce the subtitles in synchronization with the moving picture.

The subtitle stream is multiplexed into the moving picture stream and delivered. The receiving device 100 demultiplexes the subtitle stream from the moving picture stream, and supplies the demultiplexed moving picture stream and the subtitle stream to the image processing apparatus 200. Instead of the receiving device 100, the image processing apparatus 200 may demultiplex the subtitle stream.

The image processing apparatus 200 combines subtitles with a moving picture based on the moving picture stream and the subtitle stream. Specifically, the image processing apparatus 200 acquires a parallax and subtitle data from the subtitle stream, and generates a stereoscopic subtitle picture to be stereoscopically displayed at a position according to the parallax based on the subtitle data. The image processing apparatus 200 combines the stereoscopic subtitle picture with the moving picture. Then, the image processing apparatus 200 supplies the moving picture combined with the stereoscopic subtitle picture to the display device 300.

The image processing apparatus 200 is configured to acquire a moving picture stream and a subtitle stream delivered from a broadcasting station or the like from the receiving device 100, but the image processing apparatus 200 may acquire a moving picture stream and a subtitle stream recorded in a moving picture recording device.

The display device 300 stereoscopically displays the moving picture combined with the stereoscopic subtitle picture. As a stereoscopic display scheme, an active shutter glasses scheme, a polarization display scheme, a parallax barrier scheme, or the like is used.

[Example configuration of image processing apparatus]

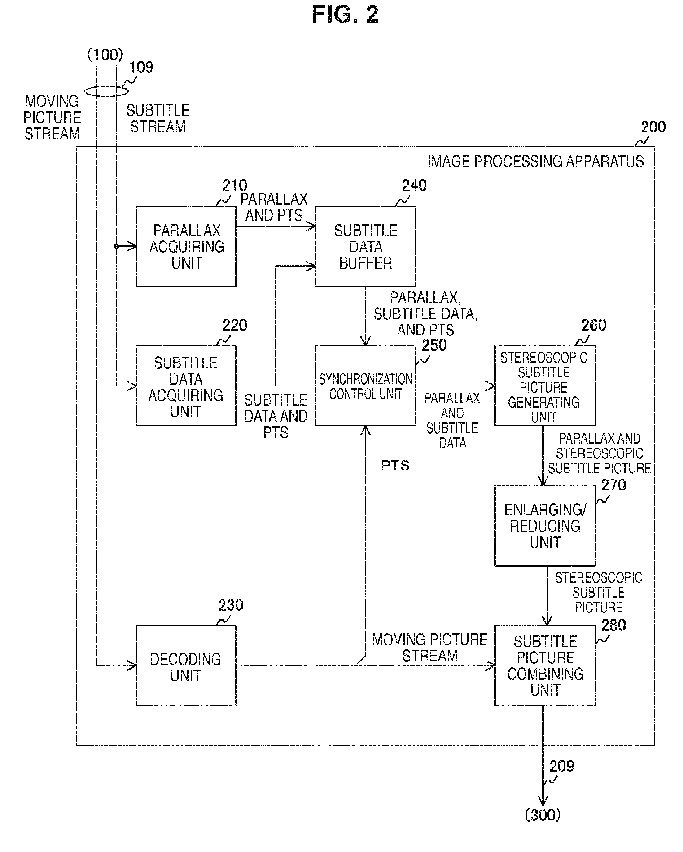

FIG. 2 is a block diagram illustrating an exemplary configuration of the image processing apparatus 200. The image processing apparatus 200 includes a parallax acquiring unit 210, a subtitle data acquiring unit 220, a decoding unit 230, a subtitle data buffer 240, a synchronization control unit 250, a stereoscopic subtitle picture generating unit 260, an enlarging/reducing unit 270, and a subtitle picture combining unit 280.

The parallax acquiring unit 210 acquires a parallax and a PTS from the subtitle stream. Specifically, the parallax acquiring unit 210 acquires the PTS from the header of the PES packet in the subtitle stream, and acquires the parallax from the payload of the PES packet. The parallax acquiring unit 210 causes the PTS and the parallax acquired from the same PES packet to be held in the subtitle data buffer 240 in association with each other.

The subtitle data acquiring unit 220 acquires subtitle data and a PTS from the subtitle stream. Specifically, the subtitle data acquiring unit 220 acquires the PTS from the header of the PES packet in the subtitle stream, and acquires the subtitle data from the payload of the PES packet. The parallax acquiring unit 210 causes the PTS and the subtitle data acquired from the same PES packet to be held in the subtitle data buffer 240 in association with each other. The subtitle data acquiring unit 220 is an example of a subtitle information acquiring unit set forth in the appended claims.

When a moving picture stream is coded, the decoding unit 230 decodes the moving picture stream. The decoding unit 230 decodes the moving picture stream according to a decoding scheme corresponding to a coding scheme for the moving picture stream. The decoding unit 230 supplies the decoded moving picture stream to the subtitle picture combining unit 280. Further, the decoding unit 230 acquires the PTS from the subtitle stream, and supplies the PTS to the synchronization control unit 250.

The synchronization control unit 250 supplies the subtitle data and the parallax to the stereoscopic subtitle picture generating unit 260 in synchronization with a display timing of the moving picture. Specifically, the synchronization control unit 250 receives the PTS acquired by the decoding unit 230, and determines whether or not a PTS having a value identical to that of the received PTS is held in the subtitle data buffer 240. When a PTS having a value identical to that of the received PTS is held, the synchronization control unit 250 reads the subtitle data and the parallax corresponding to the PTS from the subtitle data buffer 240. The synchronization control unit 250 supplies the read subtitle data and the parallax to the stereoscopic subtitle picture generating unit 260.

The stereoscopic subtitle picture generating unit 260 generates the stereoscopic subtitle picture (the left subtitle picture and the right subtitle picture) to be stereoscopically displayed at the display position according to the parallax based on the subtitle data. Specifically, when the subtitle data includes the subtitle picture, the stereoscopic subtitle picture generating unit 260 generates a picture deviated from the subtitle picture in the screen in the left direction when viewed by the viewer and a picture deviated from the subtitle picture in the right direction according to the subtitle parallax. The stereoscopic subtitle picture generating unit 260 regards one of the pictures as a left subtitle picture and the other as a right subtitle picture. When the subtitle data includes a character string indicating subtitles, the stereoscopic subtitle picture generating unit 260 generates a picture obtained by rendering the character string as a subtitle picture, and generates the right subtitle picture and the left subtitle picture by causing the subtitle picture to deviate rightward and leftward. The stereoscopic subtitle picture generating unit 260 supplies the generated stereoscopic subtitle picture to the enlarging/reducing unit 270 together with the parallax.

The enlarging/reducing unit 270 enlarges or reduces the stereoscopic subtitle picture so that the size of the stereoscopic subtitle picture increases as the display position of the stereoscopic subtitle picture approaches the front side. Specifically, the enlarging/reducing unit 270 obtains an enlargement ratio and a reduction ratio using the following Formula 1.

$$S = 1 - (\alpha/100) \times (D/Dm) \qquad \text{Formula 1}$$

In Formula 1, S indicates an enlargement ratio or a reduction ratio. $\alpha$ is a percentage indicating a correction coefficient for correcting the enlargement ratio or the reduction ratio, and is set to a value of "0" to "100" (%). Using (the enlargement ratio or the reduction ratio) decided based on only the parallax D acquired in the parallax acquiring unit 210, insufficiency of a sense of perspective is not resolved, or conversely, a sense of perspective is emphasized too much, and thus in this case, S is corrected using the correction coefficient $\alpha$. Specifically, when the user determines that a sense of perspective is insufficient, a large correction coefficient $\alpha$ is set by the user, and when the user determines that a sense of perspective is emphasized too much, a small correction coefficient is set by the user. The parallax D is a parallax defined based on a number Dm of steps, and the number Dm of steps indicates a number of steps into which a parallax of each range of the front side or the back side is divided. When the parallax D of each range is divided into 128 steps, "128" is used as the number Dm of steps, and a value of "-128" to "127" is acquired as the parallax D by the image processing apparatus 200. The acquired parallax D is used as an amount for causing the left subtitle picture and the right subtitle picture to deviate from the right subtitle picture in the horizontal direction. When the parallax D is negative, the subtitle picture is stereoscopically displayed in front of the reference position in the depth direction, whereas when the parallax D is positive, the subtitle picture is stereoscopically displayed behind the reference position. When the parallax D is "0," the subtitle picture is displayed at the reference position but not stereoscopically viewed. For example, the reference position is set to a position on the display plane of the display device 300.

Through Formula 1, when the parallax D is negative (that is, the display position is the front side), S is calculated to be greater than "1," and S is used as the enlargement ratio. However, when the parallax D is positive (that is, the display position is the back side), S is calculated to be less than "1," and S is used as the reduction ratio. The enlarging/reducing unit 270 enlarges or reduces the stereoscopic subtitle picture based on the calculated S, and supplies the enlarged or reduced stereoscopic subtitle picture to the subtitle picture combining unit 280.

The subtitle picture combining unit 280 combines the enlarged or reduced stereoscopic subtitle picture with the moving picture. The subtitle picture combining unit 280 supplies the moving picture stream combined with the stereoscopic subtitle picture to the display device 300.

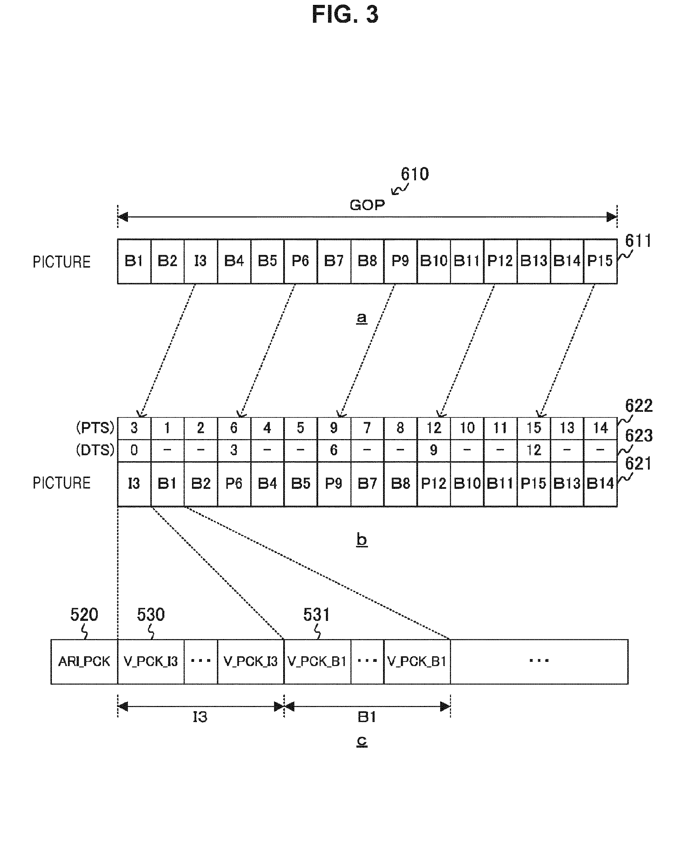

FIG. 3 is a diagram illustrating an exemplary configuration of the moving picture stream according to the first embodiment. The moving picture stream is coded in units called groups of pictures (GOPs), and decoded in the decoding unit 230 in units of GOPs. A GOP is a set of pictures including at least one intra (I) picture used as a reference in coding. FIG. 3a illustrates an example in which a GOP 610 is configured with a total of 15 pictures 611 including one I picture, 4 predirective (P) pictures, and 10 bidirectionally predictive (B) pictures. Here, an I picture is a picture used as a reference in coding. A P picture is a picture to be coded using a difference with an I picture or a P picture that precedes it chronologically. A B picture is a picture to be coded using a difference with I pictures or P pictures chronologically before and after it.

The 15 pictures in the GOP are coded such that some pictures are switched in an order as illustrated in FIG. 3b. This is done based on a feature of a coding scheme in an MPEG standard to avoid waiting for a chronologically subsequent picture at the time of decoding. For example, in order to decode a B picture (B5), it is necessary to refer to an I picture (I3) and a P picture (P6). To this end, switching has to be performed as illustrated in FIG. 3b so that picture data (I3 and P6) is completed when the B picture (B5) is decoded. Further, in order to define an order relation of a picture 621, a pack header of V_PCK is given time stamps such as a PTS 622 and a decoding time stamp (DTS) 623. As described above, the PTS 622 is reproduction and output time management information, and indicates when a unit picture given a time stamp is reproduced and output. Meanwhile, the DTS 623 is decoding time management information, and indicates when a unit picture given a time stamp is decoded.

Coded pictures are placed in one or more packs as illustrated in FIG. 3c. In a pack, a plurality of PES packets are connected, and a pack header is added. For example, the I picture (I3) is held as V_PCK_I3 (530), and the B picture (B1) is held as V_PCK_B1 (531). In a set of V_PCKs 530 configuring one GOP 610, ARI_PCK 520 including supplementary data is multiplexed together with A_PCK 520. A group of multiplexed packs configures a moving picture stream.

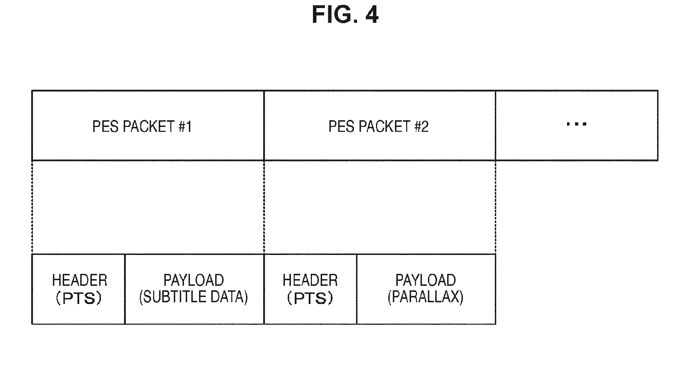

FIG. 4 is a diagram illustrating an exemplary configuration of a subtitle stream according to an embodiment. A subtitle stream is configured with a group of PES packets independent of a moving picture stream. A PES packet is generated by dividing data (for example, subtitle data or a parallax) configuring a subtitle stream as necessary, adding a header, and packetizing resultant data. Each of PES packets in a subtitle stream includes a packet header and a payload. For example, a PTS is described in the packet header. Subtitle data to be displayed at a timing indicated by the PTS and a parallax of the subtitle data are stored in the payload. Further, a horizontal coordinate and a vertical coordinate of a region on which the subtitle data is displayed and a configuration (for example, a range of the horizontal coordinate and the vertical coordinate) of a main picture combined with the subtitle data are stored in the payload.

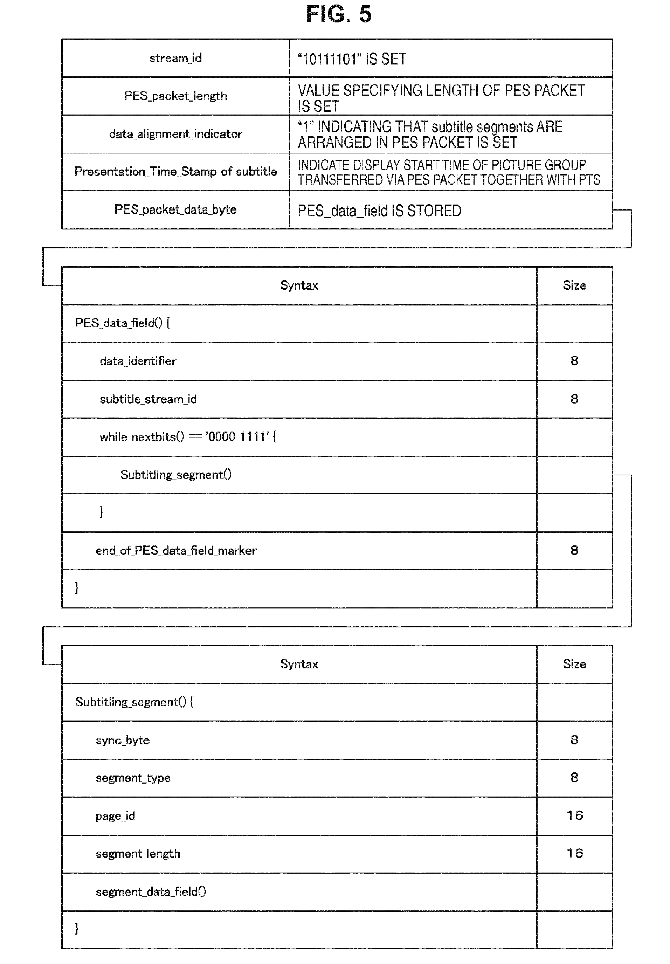

FIG. 5 is a diagram illustrating an exemplary data structure of a PES packet in a subtitle stream according to an embodiment. For example, data according to the DVB standard is described in a PES packet. In the DVB standard, identification information (Stream_id) of a subtitle stream, a PES packet length (PES_packet_length), and a PTS of subtitle data, and the like are described in a header of a PES packet. Further, an indicator (PES_alignment_indicator) indicating that subtitle data is arranged in a PES packet is described. A payload (data in "PES_data_field") of a PES packet is stored in a field of "PES_packet_data_byte." A payload is provided with a field of "subtitle_segment ()." In the DVB standard, each piece of data of components of a subtitle stream is referred to as a "segment." The details of each "segment" are described in a field of "subtitle_segment ()" in FIG. 5. Specifically, information (sync_byte) specifying a start position of "segment" is described in "subtitle_segment ()", a (segment_type) and a length (segment_length) of "segment" type and identification information (page_id) of a main picture used by "segment" are described. Further, data of "segment" is stored in "segment_data_field." A type (segment_type) of "segment" is, for example, subtitle data, a parallax, configuration information (for example, a horizontal coordinate and a vertical coordinate of a display region) of subtitle data, or a configuration (for example, a range of a horizontal coordinate and a vertical coordinate) of a main picture combined with subtitle data.

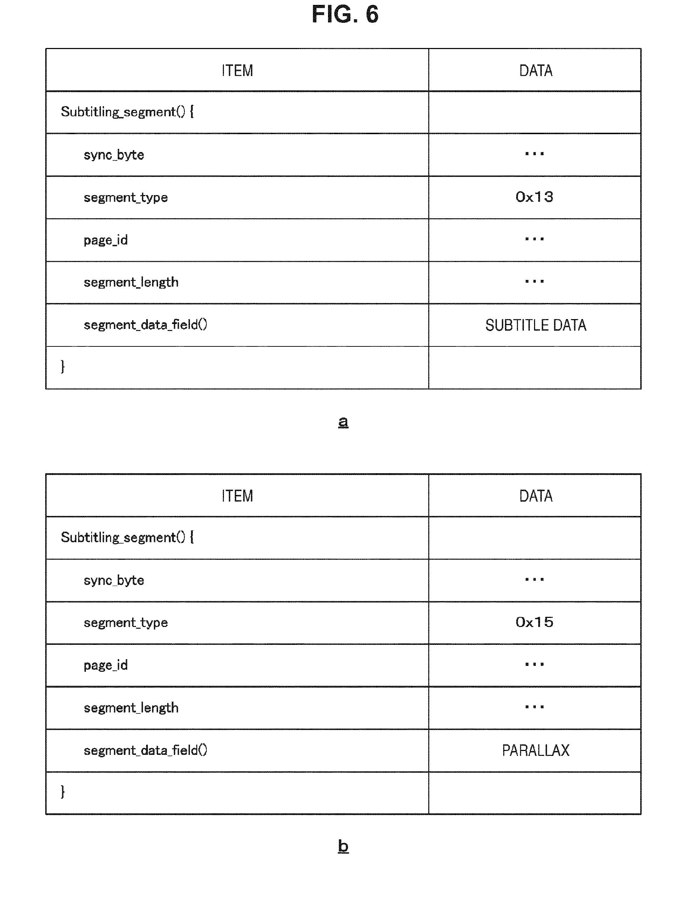

FIG. 6 is a diagram illustrating exemplary data stored in a PES packet according to an embodiment. As described above, "subtitle_segment ()" in a payload of a PES packet includes a region called "segment_type" or "segment_data_field ()." Subtitle data or a parallax is stored in "segment_data_field ()." As FIG. 6a illustrates, in a case where the subtitle data is stored in "segment_data_field ()" as "segment", "0x13" indicating that "segment" is subtitle data is stored in the field of "segment_type." Further, as FIG. 6a illustrates, in case a parallax is stored in "segment_data_field ()" as "segment", "0x15" indicating that "segment" is a subtitle parallax is stored in the field of "segment_type."

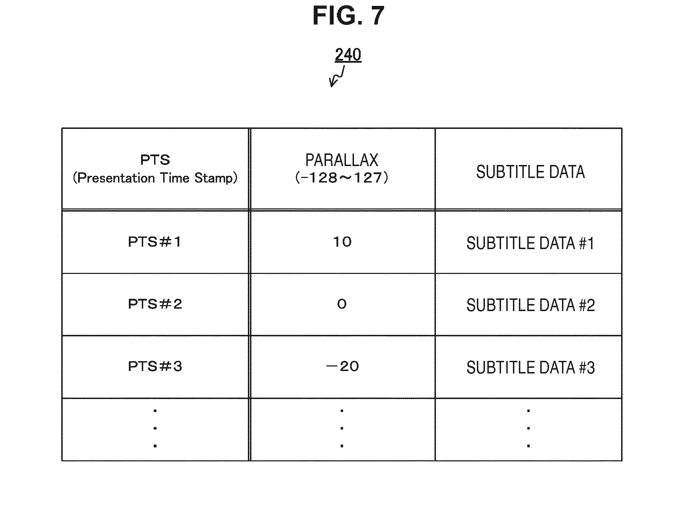

FIG. 7 is a diagram illustrating an exemplary configuration of the subtitle data buffer 240. The subtitle data buffer 240 holds the parallax and the subtitle data in association with the PTS. A parallax acquired from a PES packet provided with a PTS is held in the subtitle data buffer 250 in association with the PTS. Further, subtitle data acquired from a PES packet provided with a PTS is held in the subtitle data buffer 240 in association with the PTS. The subtitle data and the parallax that are common in a PTS are held in association with the PTS. For example, when "subtitle data #1" and a parallax of "10" are held in association with a "PTS#1," the "subtitle data #1" and "10" are read at a timing of the "PTS#1." Then, the "subtitle data #1" is stereoscopically displayed at the position according to the parallax "10."

[Exemplary operation of image processing apparatus]

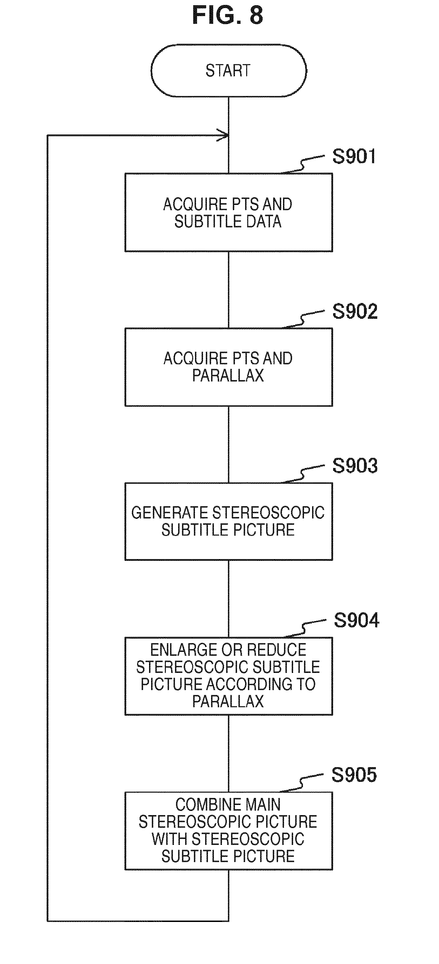

FIG. 8 is a diagram illustrating an exemplary operation of the image processing apparatus 200 according to an embodiment. For example, this operation starts when a moving picture stream and a subtitle stream are input to the image processing apparatus 200.

In the image processing apparatus 200, the parallax acquiring unit 210 acquires a PTS and parallaxes from the subtitle stream, and causes the PTS and the parallaxes to be held in the subtitle data buffer 240 (step S901). Further, the subtitle data acquiring unit 220 acquires the subtitle data and the parallax from the subtitle stream, and causes the subtitle data and the parallax to be held in the subtitle data buffer 240 (step S902). The synchronization control unit 250 reads the subtitle data and the parallax corresponding to the PTS acquired from the moving picture stream from the subtitle data buffer 240. Then, the stereoscopic subtitle picture generating unit 260 generates the stereoscopic subtitle picture from the read subtitle data (step S903).

The enlarging/reducing unit 270 enlarges or reduces the stereoscopic subtitle picture according to the parallax (step S904). The subtitle picture combining unit combines the enlarged or reduced stereoscopic subtitle picture with the main stereoscopic picture (step S905). After step S905, the image processing apparatus 200 causes the process to return to step S901.

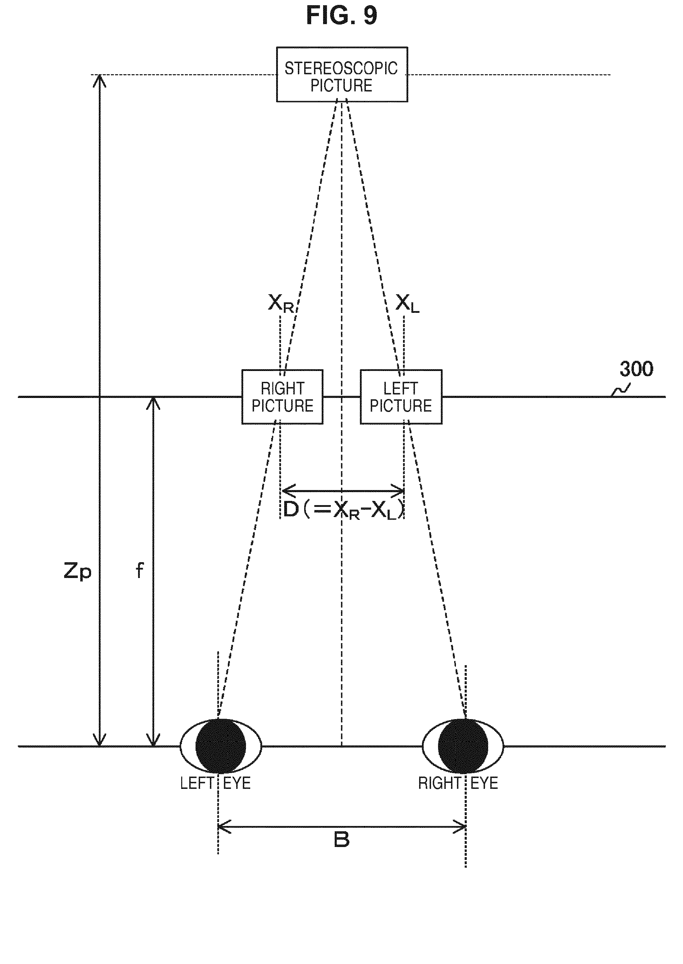

FIG. 9 is a diagram for describing a parallax according to an embodiment. A reference horizontal coordinate (for example, a horizontal coordinate of the center) of a right picture to be displayed on a display plane of the display device 300 is assumed to be $X_R$, and a reference horizontal coordinate of a left picture is assumed to be $X_L$. A value of a horizontal coordinate decreases as it is closer to the left when viewed by the viewer. In this case, for example, a value obtained by subtracting $X_L$ from $X_R$ is used as a parallax D.

Here, a distance between the left eye and the right eye is assumed to be a base distance B, a distance from the viewer to the display device 300 is assumed to be f, and a display position of a stereoscopic picture to be stereoscopically viewed in the depth direction is assumed to be Zp. At this time, since a triangle formed by the right eye, the left eye, and the center of the stereoscopic picture is similar to a triangle formed by $X_R$, $X_L$, and the center of the stereoscopic picture, the following Formula 2 holds.

$$D:f = B:Zp \quad \text{Formula 2}$$

Through Formula 2, the parallax D for performing display at Zp is obtained, and delivered through the subtitle stream. At the position at which display is performed at Zp, when a sense of perspective of a subtitle picture is insufficient, the subtitle picture is enlarged or reduced based on the enlargement ratio or the reduction ratio obtained by in Formula 1. A degree of a sense of perspective based on the enlargement ratio or the reduction ratio is adjusted by changing the correction coefficient $\alpha$ in Formula 1.

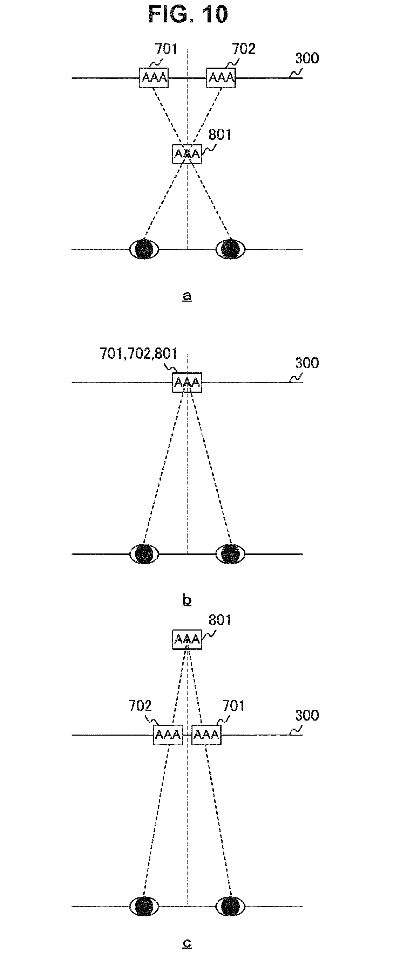

FIG. 10 is a diagram illustrating an exemplary stereoscopic display method according to an embodiment. FIG. 10a is a diagram illustrating an exemplary display method of displaying a picture at the front side. In the horizontal direction, coordinates of a right subtitle picture 701 are assumed to be at the left when viewed by the viewer, and coordinates of a left subtitle picture 702 are assumed to be at the right when viewed by the viewer. In this case, when the display device 300 displays the pictures so that the left subtitle picture 702 is viewed by the viewer's left eye, and the right subtitle picture 701 is viewed by the right eye, the viewer can view a subtitle picture 801 being displayed at the front side.

FIG. 10b is a diagram illustrating an exemplary display method of displaying a subtitle picture at a reference position. The horizontal coordinates of the right subtitle image 701 and the left subtitle picture 702 are assumed not to change. In this case, when the display device 300 displays the pictures so that the left subtitle picture 702 is viewed by the viewer's left eye, and the right subtitle picture 701 is viewed by the right eye, the viewer can view the subtitle picture 801 being displayed on the display plane (the reference position) of the display device 300. At this time, the subtitle picture 801 is not stereoscopically viewed.

FIG. 10c is a diagram illustrating an exemplary display method of displaying a subtitle picture at the back side. In the horizontal direction, coordinates of a right subtitle picture 701 are assumed to be at the right when viewed by the viewer, and coordinates of a left subtitle picture 702 are assumed to be at the left when viewed by the viewer. In this case, when the display device 300 displays the pictures so that the left subtitle picture 702 is viewed by the viewer's left eye, and the right subtitle picture 701 is viewed by the right eye, the viewer can view the subtitle picture 801 being stereoscopically displayed at the back side.

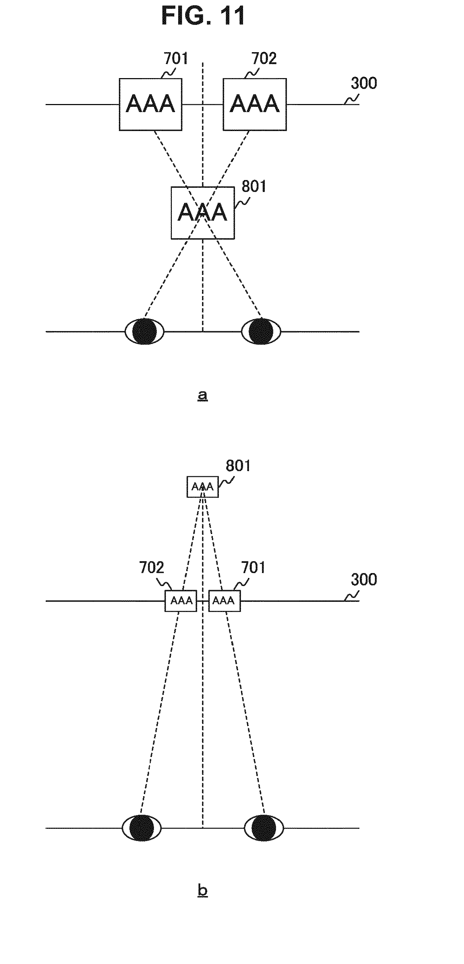

FIG. 11 is a diagram illustrating an exemplary stereoscopic subtitle picture in which a sense of perspective is emphasized according to an embodiment. FIG. 11a is a diagram illustrating an exemplary stereoscopic subtitle picture displayed at the front side. In this case, the image processing apparatus 200 enlarges the stereoscopic subtitle pictures (701 and 702) according to the parallax. As a result, as the display position of the subtitle picture 801 viewed by the viewer approaches the front side, the subtitle picture 801 is enlarged and stereoscopically displayed.

FIG. 11b is a diagram illustrating an exemplary stereoscopic subtitle picture in which a subtitle picture is displayed at the back side. In this case, the image processing apparatus 200 reduces the stereoscopic subtitle pictures (701 and 702) according to the parallax. As a result, as the display position of the subtitle picture 801 viewed by the viewer approaches the back side, the subtitle picture 801 is reduced and stereoscopically displayed.

As described above, according to the embodiment of the present technology, it is possible to emphasize a sense of perspective of a subtitle picture by enlarging or reducing a stereoscopic subtitle picture so that the size of the stereoscopic subtitle picture increases as a display position approaches the front side. Accordingly, when a subtitle picture converted from 2D to 3D is combined with a moving picture to be stereoscopically displayed, the viewer does not feel an insufficient sense of perspective of a subtitle picture.

<2. Modified example>

A modified example will now be described. In the first embodiment, the parallax D is defined based on the right subtitle picture. However, in contrast, deviation of the left subtitle picture and the right subtitle picture in the horizontal direction based on the left subtitle picture may be used as the parallax D. The image processing apparatus 200 according to the modified example differs from that of the above embodiment in that parallax is defined based on the left subtitle picture. Specifically, as illustrated in FIG. 9, the image processing apparatus 200 uses a value obtained by subtracting $X_R$ from $X_L$ as the parallax D, instead of using a value obtained by subtracting $X_L$ from $X_R$. In this case, when the display position is the front side, the parallax D is positive, and when the display position is the back side, the parallax D is negative. To this end, S is calculating using the following Formula 2.

$$S = 1 + (\alpha/100) \times (D/Dm) \qquad \text{Formula 3}$$

Through Formula 3, when the parallax D is positive, S (the enlargement ratio) is calculated to be greater than "1," and when the parallax D is negative, S (the reduction ratio) is calculated to be less than "1."

The above-described embodiments are examples for embodying the present technology, and matters in the embodiments each have a corresponding relationship with invention-specific matters in the claims. Likewise, the matters in the embodiments and the invention-specific matters in the claims denoted by the same names have a corresponding relationship with each other. However, the present technology is not limited to the embodiments, and various modifications of the embodiments may be embodied in the scope of the present technology without departing from the spirit of the present technology.

The processing sequences that are described in the embodiments described above may be handled as a method having a series of sequences or may be handled as a program for causing a computer to execute the series of sequences and recording medium storing the program. As the recording medium, a hard disk, a CD (Compact Disc), an MD (MiniDisc), and a DVD (Digital Versatile Disk), a memory card, and a Blu-ray disc (registered trademark) can be used.

Additionally, the present technology may also be configured as below.

(1) An image processing apparatus including:

a subtitle information acquiring unit configured to acquire subtitle information to be combined with a main stereoscopic picture;
a parallax acquiring unit configured to acquire a parallax causing the subtitle information to be stereoscopically displayed;
a stereoscopic subtitle picture generating unit configured to generate a stereoscopic subtitle picture to be stereoscopically displayed at a display position according to the parallax from the subtitle information; and
an enlarging/reducing unit configured to enlarge or reduce the stereoscopic subtitle picture in a manner that a size of the stereoscopic subtitle picture increases as the display position approaches a front side.

(2) The image processing apparatus according to (1),
wherein the enlarging/reducing unit enlarges the stereoscopic subtitle picture according to the parallax when the display position is in front of a certain reference position, and reduces the stereoscopic subtitle picture according to the parallax when the display position is behind the certain reference position.

(3) The image processing apparatus according to (1) or (2), further including:

a subtitle combining unit configured to combine the enlarged or reduced stereoscopic subtitle picture with the main stereoscopic picture.

(4) The image processing apparatus according to any one of (1) to (3), further including:

a buffer configured to hold the subtitle picture, a parallax of the subtitle information, and a display timing in association with one another; and
a control unit configured to read the subtitle information and the parallax corresponding to the display timing from the buffer at the display timing and supply the subtitle information and the parallax to the picture generating unit,
wherein the subtitle information acquiring unit further acquires the display timing and causes the display timing to be held in the buffer in association with the subtitle information, and
wherein the parallax acquiring unit further acquires the display timing and causes the parallax to be held in the buffer in association with the display timing.

(5) The image processing apparatus according to any one of (1) to (4),
wherein the enlarging/reducing unit enlarges or reduces the stereoscopic subtitle picture according to an enlargement ratio or a reduction ratio corrected based on a certain correction coefficient.

(6) The image processing apparatus according to any one of (1) to (5),
wherein the subtitle information includes a picture indicating subtitles or a character string indicating the subtitles.

(7) An image processing method including:

a subtitle information acquiring process of acquiring, by a subtitle information acquiring unit, subtitle information to be combined with a main stereoscopic picture;
a parallax acquiring process of acquiring, by a parallax acquiring unit, a parallax causing the subtitle information to be stereoscopically displayed;
a stereoscopic subtitle picture generating process of generating, by a stereoscopic subtitle picture generating unit, a stereoscopic subtitle picture to be stereoscopically displayed at a display position according to the parallax from the subtitle information; and
an enlarging/reducing process of enlarging or reducing, by an enlarging/reducing unit, the stereoscopic subtitle picture in a manner that a size of the stereoscopic subtitle picture increases as the display position approaches a front side.

(8) A program for causing a computer to execute:

a subtitle information acquiring process of acquiring, by a subtitle information acquiring unit, subtitle information to be combined with a main stereoscopic picture;
a parallax acquiring process of acquiring, by a parallax acquiring unit, a parallax causing the subtitle information to be stereoscopically displayed;
a stereoscopic subtitle picture generating process of generating, by a stereoscopic subtitle picture generating unit, a stereoscopic subtitle picture to be stereoscopically displayed at a display position according to the parallax from the subtitle information; and
an enlarging/reducing process of enlarging or reducing, by an enlarging/reducing unit, the stereoscopic subtitle picture in a manner that a size of the stereoscopic subtitle picture increases as the display position approaches a front side.

Reference Signs List

100    receiving device
200    image processing apparatus
210    parallax acquiring unit
220    subtitle data acquiring unit
230    decoding unit
240    subtitle data buffer
250    synchronization control unit
260    stereoscopic subtitle picture generating unit
270    enlarging/reducing unit
280    subtitle picture combining unit
300    display device

**Claims**

1. An image processing apparatus comprising:

   a subtitle information acquiring unit configured to acquire subtitle information to be combined with a main stereoscopic picture;
   a parallax acquiring unit configured to acquire a parallax causing the subtitle information to be stereoscopically displayed;
   a stereoscopic subtitle picture generating unit configured to generate a stereoscopic subtitle picture to be stereoscopically displayed at a display position according to the parallax from the subtitle information; and
   an enlarging/reducing unit configured to enlarge or reduce the stereoscopic subtitle picture in a manner that a size of the stereoscopic subtitle picture increases as the display position approaches a front side.

2. The image processing apparatus according to claim 1,
   wherein the enlarging/reducing unit enlarges the stereoscopic subtitle picture according to the parallax when the display position is in front of a certain reference position, and reduces the stereoscopic subtitle picture according to the parallax when the display position is behind the certain reference position.

3. The image processing apparatus according to claim 1, further comprising:

   a subtitle combining unit configured to combine the enlarged or reduced stereoscopic subtitle picture with the main stereoscopic picture.

4. The image processing apparatus according to claim 1, further comprising:

   a buffer configured to hold the subtitle picture, a parallax of the subtitle information, and a display timing in association with one another; and
   a control unit configured to read the subtitle information and the parallax corresponding to the display timing from the buffer at the display timing and supply the subtitle information and the parallax to the picture generating unit,

wherein the subtitle information acquiring unit further acquires the display timing and causes the display timing to be held in the buffer in association with the subtitle information, and

wherein the parallax acquiring unit further acquires the display timing and causes the parallax to be held in the buffer in association with the display timing.

5. The image processing apparatus according to claim 1,

wherein the enlarging/reducing unit enlarges or reduces the stereoscopic subtitle picture according to an enlargement ratio or a reduction ratio corrected based on a certain correction coefficient.

6. The image processing apparatus according to claim 1,

wherein the subtitle information includes a picture indicating subtitles or a character string indicating the subtitles.

7. An image processing method comprising:

a subtitle information acquiring process of acquiring, by a subtitle information acquiring unit, subtitle information to be combined with a main stereoscopic picture;

a parallax acquiring process of acquiring, by a parallax acquiring unit, a parallax causing the subtitle information to be stereoscopically displayed;

a stereoscopic subtitle picture generating process of generating, by a stereoscopic subtitle picture generating unit, a stereoscopic subtitle picture to be stereoscopically displayed at a display position according to the parallax from the subtitle information; and

an enlarging/reducing process of enlarging or reducing, by an enlarging/reducing unit, the stereoscopic subtitle picture in a manner that a size of the stereoscopic subtitle picture increases as the display position approaches a front side.

8. A program for causing a computer to execute:

a subtitle information acquiring process of acquiring, by a subtitle information acquiring unit, subtitle information to be combined with a main stereoscopic picture;

a parallax acquiring process of acquiring, by a parallax acquiring unit, a parallax causing the subtitle information to be stereoscopically displayed;

a stereoscopic subtitle picture generating process of generating, by a stereoscopic subtitle picture generating unit, a stereoscopic subtitle picture to be stereoscopically displayed at a display position according to the parallax from the subtitle information; and

an enlarging/reducing process of enlarging or reducing, by an enlarging/reducing unit, the stereoscopic subtitle picture in a manner that a size of the stereoscopic subtitle picture increases as the display position approaches a front side.

# FIG. 1

100

IMAGE PROCESSING
APPARATUS

MOVING PICTURE
STREAM AND
SUBTITLE STREAM

109

200

RECEIVING DEVICE

209

300

DISPLAY DEVICE

# FIG. 2

# FIG. 3

# FIG. 4

| PES PACKET #1 | | PES PACKET #2 | | · · · |
|---|---|---|---|---|
| | | | | |
| HEADER (PTS) | PAYLOAD (SUBTITLE DATA) | HEADER (PTS) | PAYLOAD (PARALLAX) | |

# FIG. 5

| | |
|---|---|
| stream_id | "10111101" IS SET |
| PES_packet_length | VALUE SPECIFYING LENGTH OF PES PACKET IS SET |
| data_alignment_indicator | "1" INDICATING THAT subtitle segments ARE ARRANGED IN PES PACKET IS SET |
| Presentation_Time_Stamp of subtitle | INDICATE DISPLAY START TIME OF PICTURE GROUP TRANSFERRED VIA PES PACKET TOGETHER WITH PTS |
| PES_packet_data_byte | PES_data_field IS STORED |

| Syntax | Size |
|---|---|
| PES_data_field() { | |
| data_identifier | 8 |
| subtitle_stream_id | 8 |
| while nextbits() == '0000 1111' { | |
| Subtitling_segment() | |
| } | |
| end_of_PES_data_field_marker | 8 |
| } | |

| Syntax | Size |
|---|---|
| Subtitling_segment() { | |
| sync_byte | 8 |
| segment_type | 8 |
| page_id | 16 |
| segment_length | 16 |
| segment_data_field() | |
| } | |

# FIG. 6

| ITEM | DATA |
|---|---|
| Subtitling_segment() { | |
| sync_byte | ... |
| segment_type | 0x13 |
| page_id | ... |
| segment_length | ... |
| segment_data_field() | SUBTITLE DATA |
| } | |

<u>a</u>

| ITEM | DATA |
|---|---|
| Subtitling_segment() { | |
| sync_byte | ... |
| segment_type | 0x15 |
| page_id | ... |
| segment_length | ... |
| segment_data_field() | PARALLAX |
| } | |

<u>b</u>

# FIG. 7

<u>240</u>

| PTS<br>(Presentation Time Stamp) | PARALLAX<br>(−128〜127) | SUBTITLE DATA |
|---|---|---|
| PTS#1 | 10 | SUBTITLE DATA #1 |
| PTS#2 | 0 | SUBTITLE DATA #2 |
| PTS#3 | −20 | SUBTITLE DATA #3 |
| ⋮ | ⋮ | ⋮ |

# FIG. 8

START

S901

ACQUIRE PTS AND
SUBTITLE DATA

S902

ACQUIRE PTS AND
PARALLAX

S903

GENERATE STEREOSCOPIC
SUBTITLE PICTURE

S904

ENLARGE OR REDUCE
STEREOSCOPIC SUBTITLE
PICTURE ACCORDING TO
PARALLAX

S905

COMBINE MAIN
STEREOSCOPIC PICTURE
WITH STEREOSCOPIC
SUBTITLE PICTURE

# FIG. 9

# FIG. 10

a

b

c

# FIG. 11

a

b

## INTERNATIONAL SEARCH REPORT

| International application No. |
| --- |
| PCT/JP2013/058974 |

### A. CLASSIFICATION OF SUBJECT MATTER
*H04N13/04*(2006.01)i

According to International Patent Classification (IPC) or to both national classification and IPC

### B. FIELDS SEARCHED

Minimum documentation searched (classification system followed by classification symbols)
H04N13/04

Documentation searched other than minimum documentation to the extent that such documents are included in the fields searched
Jitsuyo Shinan Koho        1922-1996   Jitsuyo Shinan Toroku Koho   1996-2013
Kokai Jitsuyo Shinan Koho   1971-2013   Toroku Jitsuyo Shinan Koho   1994-2013

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| Y | JP 2011-249945 A  (Sony Corp.),<br>08 December 2011 (08.12.2011),<br>paragraphs [0051], [0058], [0079], [0107] to<br>[0111]; fig. 1, 2, 12, 21, 22<br>& US 2011/0285817 A1    & AR 81205 A<br>& BRA PI1102177 | 1-8 |
| Y | JP 2012-85166 A  (Sony Corp.),<br>26 April 2012 (26.04.2012),<br>paragraph [0058]; paragraph [0059], fig. 6B<br>& US 2012/0092456 A1    & CN 102572463 A | 1-8 |
| Y | JP 2011-199389 A  (Sony Corp.),<br>06 October 2011 (06.10.2011),<br>paragraphs [0014], [0015], [0026], [0028]<br>& US 2011/0228057 A1    & CN 102196288 A | 1-8 |

| ☒ | Further documents are listed in the continuation of Box C. | ☐ | See patent family annex. |
| --- | --- | --- | --- |

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>    23 April, 2013 (23.04.13) | Date of mailing of the international search report<br>    07 May, 2013 (07.05.13) |
| --- | --- |
| Name and mailing address of the ISA/<br>    Japanese Patent Office | Authorized officer |
| Facsimile No. | Telephone No. |

Form PCT/ISA/210 (second sheet) (July 2009)

**INTERNATIONAL SEARCH REPORT**

| International application No. |
| --- |
| PCT/JP2013/058974 |

C (Continuation).　DOCUMENTS CONSIDERED TO BE RELEVANT

| Category* | Citation of document, with indication, where appropriate, of the relevant passages | Relevant to claim No. |
| --- | --- | --- |
| Y | JP 2012-60267 A　(Sony Corp.),<br>22 March 2012 (22.03.2012),<br>paragraph [0280]; fig. 64<br>& US 2012/0262546 A1　　& EP 2485492 A1<br>& WO 2012/032997 A1　　& CA 2779687 A<br>& AU 2011300020 A　　　& MX 2012005359 A<br>& CN 102714746 A | 4 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012004654 A

- JP 3086577 B